# EUROPÄISCHE PATENTSCHRIFT

(11) **EP 1 882 161 B1**
(45) Veröffentlichungstag und Bekanntmachung des Hinweises auf die Patenterteilung: **20.07.2011**
(21) Anmeldenummer: 06742948.0
(22) Anmeldetag: 17.05.2006
(51) Int. Cl.: G01D 18/00, G01D 5/165

(54) **VERFAHREN ZUR AUSWERTUNG EINES POTENTIOMETERS SOWIE SCHALTUNGSANORDNUNG MIT EINEM POTENTIOMETER**
METHOD FOR EVALUATING A POTENTIOMETER AND CIRCUIT ARRANGEMENT HAVING A POTENTIOMETER
PROCEDE POUR EVALUER UN POTENTIOMETRE ET CIRCUIT COMPORTANT UN POTENTIOMETRE

(30) Priorität: 18.05.2005 DE 102005023717
(43) Veröffentlichungstag der Anmeldung: 30.01.2008
(73) Patentinhaber: E.G.O. ELEKTRO-GERÄTEBAU GmbH, 75038 Oberderdingen (DE)
(72) Erfinder: DORWARTH, Ralf, 75038 Oberderdingen (DE); SCHILLING, Wilfried, 76703 Kraichtal (DE)
(74) Vertreter: Patentanwälte Ruff, Wilhelm, Beier, Dauster & Partner
(86) Internationale Anmeldenummer: PCT/EP2006/004649
(87) Internationale Veröffentlichungsnummer: WO 2006/122767

(56) Entgegenhaltungen:
- DE-A1- 3 522 775
- DE-A1- 4 000 521
- FR-A- 2 731 070
- US-B1- 6 577 297

## Beschreibung

Die Erfindung betrifft ein Verfahren zur Auswertung eines Potentiometers nach dem Oberbegriff des Anspruchs 1 sowie eine Schaltungsanordnung mit einem Potentiometer nach dem Oberbegriff des Anspruchs 7.

Bei der Verwendung von Potentiometern für Drehknebelsteuerungen, beispielsweise zur Aktivierung bzw. Deaktivierung und Einstellung der Temperatur einer Kochplatte einer Kochmulde oder eines Backofens, ist in der Regel kein zusätzlicher Hauptschalter zur Aktivierung bzw. Deaktivierung der Kochplatte oder des Backofens vorgesehen. Die Deaktivierung der Kochplatte oder des Backofens sollte jedoch auch in einem Fehlerfall bzw. bei einem Defekt des Potentiometers bzw. der Steuerung noch zuverlässig möglich sein. Hierzu sind unterschiedliche Lösungen bekannt.

Beispielsweise kann das Potentiometer als Doppelpotentiometer ausgeführt sein, bei dem ein zweites, redundantes Potentiometer vorgesehen ist. Derartige Doppelpotentiometer sind jedoch vergleichsweise teuer. Weiterhin muss eine Ausgangsspannung des zusätzlichen Potentiometers ausgewertet werden, wodurch ein weiterer, zugeordneter analoger Messanschluss innerhalb der Steuerung vorzusehen ist.

Eine weitere Möglichkeit ist die Verwendung eines zusätzlichen Leistungsschalters bzw. Leistungskontaktes, der mit dem Drehknebel in Wirkverbindung steht. Dieser unterbricht, unabhängig von der durch das Potentiometer ermittelten Stellung des Drehknebels, eine Versorgungsspannung eines zugeordneten Heizkörpers in einer Aus-Stellung des Drehknebels. Neben den durch den zusätzlichen Leistungsschalter verursachten Kosten entsteht ein erhöhter Verkabelungsaufwand auf Netzspannungsseite, wodurch die Herstellungskosten ebenfalls steigen.

Wenn zur Bestimmung der Stellung des Drehknebels sogenannte Codeschalter, beispielsweise mit einem Gray-Code, verwendet werden, kann eine Aus-Stellung durch eine zusätzliche, speziell hierfür vorgesehene Schleiferbahn erfasst werden. Die zusätzliche Schleiferbahn erhöht jedoch die Herstellungskosten. Außerdem muss zur Auswertung der Schleiferbahnstellung ein weiterer, zugeordneter Auswerteanschluss innerhalb der Steuerung vorgesehen werden.

Die FR 2 731 070 A zeigt ein Verfahren zur Auswertung eines Potentiometers, bei dem ein erster und ein zweiter Anschluss des Potentiometers mit wechselnden Spannungen beaufschlagt werden

Die DE 40 00 521 A1 zeigt ein Potentiometer, bei dem eine Versorgungsspannung am Mittelabgriff des Potentiometers anliegt, um Fehlfunktionen des Potentiometers zu verhindern.

### Problem und Lösung

Der Erfindung liegt als technisches Problem die Bereitstellung eines Verfahrens zur Auswertung eines Potentiometers sowie einer Schaltungsanordnung mit einem Potentiometer der eingangs genannten Art zugrunde, die eine zuverlässige Auswertung eines herkömmlichen Potentiometers hinsichtlich dessen Funktionsfähigkeit und der Potentiometerstellung ermöglichen und die kostengünstig bei geringem Platzbedarf realisierbar sind.

Die Erfindung löst dieses Problem durch ein Verfahren mit den Merkmalen des Anspruchs 1 und eine Schaltungsanordnung mit den Merkmalen des Anspruchs 4. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht. Manche der nachfolgend aufgezählten Merkmale und Eigenschaften treffen sowohl auf das Verfahren als auch auf die Schaltungsanordnung zu. Sie werden teilweise nur einmal beschrieben, gelten jedoch unabhängig voneinander sowohl für das Verfahren als auch die Schaltungsanordnung.

Erfindungsgemäß werden zur Auswertung eines Potentiometers, das einen ersten Anschluss, einen zweiten Anschluss und einen Zwischenabgriff aufweist, der erste Anschluss und/oder der zweite Anschluss mit einer ersten Ansteuerspannung und mit mindestens einer zweiten, von der ersten Ansteuerspannung verschiedenen Ansteuerspannung beaufschlagt. Dabei ist ein Widerstand zwischen dem ersten und dem zweiten Anschluss unabhängig von der Stellung des Potentiometers. Wenn die Anschlüsse bzw. der Mittelabgriff des Potentiometers nicht wie üblich auf jeweils statische Potentiale gelegt werden, kann zusätzlich zur Auswertung bzw. Ermittlung einer Potentiometerstellung noch eine Überprüfung der ordnungsgemäßen Funktion des Potentiometers durchgeführt werden, wodurch bestimmte systematische Fehlerszenarien sicher erkannt werden können. Wenn ein Fehler erkannt wird, kann beispielsweise ein Abschalten einer durch das Potentiometer gesteuerten Last erfolgen, wodurch die Notwendigkeit zusätzlicher Sicherungsmaßnahmen, beispielsweise das Vorsehen eines weiteren, redundanten Potentiometers, unterbleiben kann.

Die erste Ansteuerspannung wird an den ersten Anschluss des Potentiometers angelegt, die zweite Ansteuerspannung wird an den zweiten Anschluss des Potentiometers angelegt und eine erste, am Zwischenabgriff anliegende Messspannung wird gemessen und gespeichert. Anschließend wird die zweite Ansteuerspannung an den ersten Anschluss des Potentiometers angelegt und die erste Ansteuerspannung an den zweiten Anschluss des Potentiometers angelegt und eine zweite, am Zwischenabgriff anliegenden Messspannung gemessen. Durch Auswerten der ersten und der zweiten Messspannung kann sowohl die Funktionsfähigkeit als auch die Stellung des Potentiometers bestimmt werden. Das Potentiometer wird dann als funktionsfähig bestimmt, wenn die Summe der ersten und der zweiten Messspannung gleich der Differenz zwischen der zweiten und der ersten angelegten Ansteuerspannung ist. Diese Beziehung zwischen den Ansteuerspannungen und den Messspannungen ergibt sich theoretisch bei ordnungsgemäßer Funktion des Potentiometers. Wenn die genannte Bedingung nicht erfüllt ist, kann auf einen Fehler geschlossen werden.

In einer Weiterbildung des Verfahrens ist die erste Ansteuerspannung eine Versorgungsspannung und die zweite Ansteuerspannung eine Massespannung einer das Potentiometer aufweisenden elektrischen Schaltungsanordnung. Auf diese Weise kann eine Auswertung des Potentiometers mit bereits vorhandenen Spannungspegeln erfolgen, wodurch der erforderliche schaltungstechnische Aufwand reduziert wird.

In einer Weiterbildung des Verfahrens werden der erste und der zweite Anschluss nicht mit einer Spannung beaufschlagt, der Zwischenabgriff wird mit der ersten oder der zweiten Ansteuerspannung beaufschlagt, eine dritte Messspannung wird am ersten Anschluss gemessen und eine vierte Messspannung wird am zweiten Anschluss gemessen, wobei die dritte und die vierte Messspannung zur Bestimmung der Funktionsfähigkeit des Potentiometers ausgewertet werden. Das Potentiometer wird als funktionsfähig bestimmt, wenn die dritte Messspannung und die vierte Messspannung mit der ersten bzw. der zweiten Ansteuerspannung übereinstimmen. Eine ordnungsgemäße Verdrahtung bzw. Verkabelung des Potentiometers vorausgesetzt, müssen die dritte und die vierte Messspannung gleich der ersten bzw. zweiten Ansteuerspannung sein. Ist dies nicht der Fall, kann auf eine Fehlfunktion, beispielsweise ein defektes Potentiometer und/oder eine fehlerhafte Verkabelung, geschlossen werden.

Die erfindungsgemäße Schaltungsanordnung zur Durchführung des oben genannten Verfahrens umfasst ein Potentiometer, das einen ersten Anschluss, einen zweiten Anschluss und einen Zwischenabgriff aufweist, wobei ein Widerstand zwischen dem ersten und dem zweiten Anschluss unabhängig von der Stellung des Potentiometers ist und einen Mikroprozessor mit einem ersten Anschluss, einem zweiten Anschluss und einem dritten Anschluss. Der erste und der zweite Anschluss sind jeweils zur Ausgabe einer ersten und mindestens einer zweiten, von der ersten Spannung verschiedenen Spannung konfigurierbar. Der dritte Anschluss ist zur Messung einer analogen Spannung konfigurierbar, wobei der erste Anschluss des Potentiometers mit dem ersten Anschluss des Mikroprozessors verbunden ist, der zweite Anschluss des Potentiometers mit dem zweiten Anschluss des Mikroprozessors verbunden ist und der Zwischenabgriff des Potentiometers mit dem dritten Anschluss des Mikroprozessors verbunden ist. Der Mikroprozessor ist zur Durchführung des erfindungsgemäßen Verfahrens ausgebildet. Aufgrund der Flexibilität moderner Mikroprozessoren, deren Anschlüsse in der Regel dynamisch als Ausgänge oder als Eingänge konfigurierbar sind und bestimmte Anschlüsse zusätzlich noch als analoge Eingänge dienen können, kann mit Hilfe einer derartigen Schaltungsanordnung an den Anschlüssen des Potentiometers eine flexible Signalfolge erzeugt werden. Entstehende Signale können an den als Eingänge dienenden Anschlüssen ausgewertet werden. Durch dynamisches Umkonfigurieren eines Anschlusses von einem Ausgang in einen Eingang und umgekehrt lassen sich verschiedene Tests der Potentiometerfunktion einfach durchführen.

In einer Weiterbildung der Schaltungsanordnung sind der erste und der zweite Anschluss als Eingang konfigurierbar und der dritte Eingang ist zur Ausgabe einer Spannung konfigurierbar. Dies ermöglicht einen Testbetrieb, bei dem am Zwischenabgriff des Potentiometers eine Spannung angelegt wird, die bei ordnungsgemäßer Funktion am ersten und am zweiten Anschluss des Potentiometers anstehen muss. Bei der angelegten und den gemessenen Spannungen kann es sich um solche mit digitalem Pegel handeln, so dass kein analoger Eingangsanschluss erforderlich ist, sondern ein digitaler Eingangsanschluss ausreicht.

In einer Weiterbildung der Schaltungsanordnung ist zwischen den Zwischenabgriff und einen vierten Anschluss des Mikroprozessors oder ein schaltbares Bezugspotential ein Widerstand eingeschleift. Auf diese Weise kann bei geeigneter Konfiguration der Mikroprozessoranschlüsse beispielsweise ein Widerstandswert des Potentiometers bestimmt werden, der ebenfalls zur Funktionskontrolle verwendet werden kann.

In einer Weiterbildung der Schaltungsanordnung ist mindestens ein weiteres Potentiometer vorgesehen, das ebenfalls einen ersten Anschluss, einen zweiten Anschluss und einen Zwischenabgriff aufweist. Ein Widerstand zwischen dem ersten und dem zweiten Anschluss ist unabhängig von der Stellung des weiteren Potentiometers und der erste Anschluss des weiteren Potentiometers ist mit dem ersten Anschluss des Mikroprozessors verbunden. Der zweite Anschluss des weiteren Potentiometers ist mit dem zweiten Anschluss des Mikroprozessors verbunden und ein Zwischenabgriff des weiteren Potentiometers ist mit einem fünften Anschluss des Mikroprozessors verbunden, der zur Messung einer analogen Spannung konfigurierbar ist. Dies ermöglicht die Kaskadierung bzw. Parallelschaltung weiterer gleichartiger Potentiometer, wobei für ein hinzukommendes Potentiometer lediglich ein zugehöriger analoger Eingang am Mikroprozessor vorzusehen ist. Alternativ kann ein sogenannter Analog-Multiplexer vorgesehen sein, an dessen analoge Eingänge die Zwischenabgriffe der Potentiometer angeschlossen sind und dessen Ausgang mit einem analogen Eingang des Mikroprozessors verbunden ist.

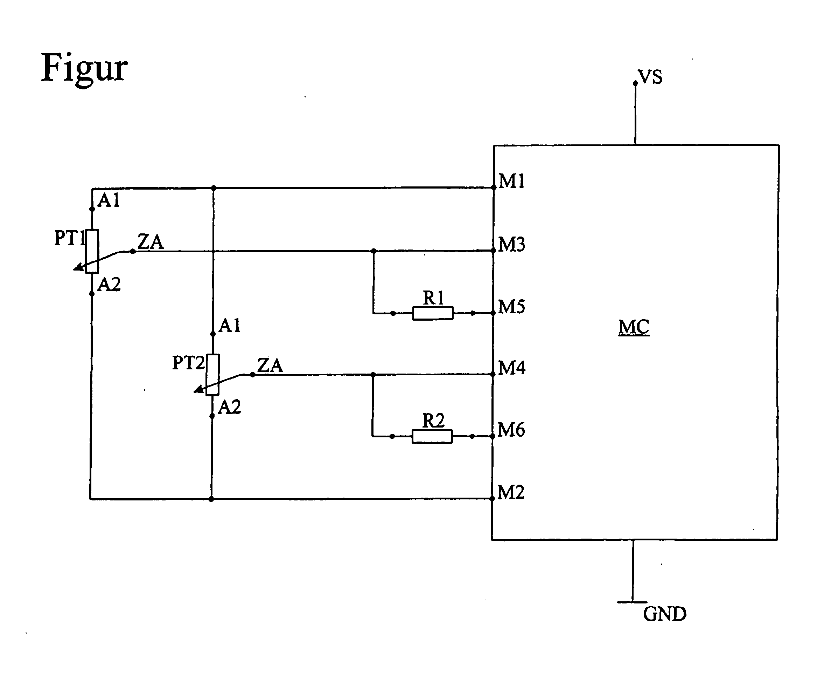

Diese und weitere Merkmale gehen außer aus den Ansprüchen auch aus der Beschreibung und der Zeichnung hervor, wobei die einzelnen Merkmale für sich allein oder zu mehreren in Form von Unterkombination bei einer Ausführungsform der Erfindung oder auf anderen Gebieten verwirklicht sein können und vorteilhafte sowie für sich schutzfähige Ausführungen darstellen können, für die hier Schutz beansprucht wird. Die Unterteilung der Anmeldung in einzelne Abschnitte sowie Zwischen-überschriften beschränken unter diesen gemachte Aussagen nicht in ihrer Allgemeingültigkeit.

### Kurzbeschreibung der Zeichnung

Ein vorteilhaftes Ausführungsbeispiel der Erfindung ist in der Zeichnung schematisch dargestellt und wird nachfolgend beschrieben. Hierbei zeigt die einzige Figur ein Schaltbild einer Schaltungsanordnung zur Auswertung mehrerer Potentiometer.

### Detaillierte Beschreibung des Ausführungsbeispiels

Die Figur zeigt ein Schaltbild einer Schaltungsanordnung mit einem ersten Potentiometer PT1 und einem zweiten Potentiometer PT2, die jeweils einen ersten Anschluss A1, einen zweiten Anschluss A2 und einen Zwischenabgriff ZA aufweisen. Ein Widerstand zwischen dem ersten Anschluss A1 und dem zweiten Anschluss A2 ist unabhängig von einer Stellung des Potentiometers PT1 bzw. PT2 und weist einen konstanten, vorbekannten Wert auf. Ein Widerstand zwischen dem Anschluss A1 bzw. A2 und dem Zwischenabgriff ZA weist einen von der Potentiometerstellung abhängigen Wert auf. Eine Summe aus dem Widerstand zwischen dem Anschluss A1 und dem Anschluss ZA und dem Widerstand zwischen dem Anschluss ZA und dem Anschluss A2 ist gleich dem Widerstand zwischen dem Anschluss A1 und A2 ist, einem Mikroprozessor MC mit Anschlüssen M1 bis M6, einem ersten Widerstand R1 und einem zweiten Widerstand R2. Der Mikroprozessor wird mit einer Versorgungsspannung VS, beispielsweise 3V oder 5V, versorgt und ist mit Masse GND verbunden.

Die Schaltungsanordnung dient zur Steuerung eines nicht gezeigten Kochfelds mit mehreren, den Potentiometern PT1 und PT2 zugeordneten Heizeinrichtungen, deren Heizleistung durch die Stellung der Potentiometer PT1 und PT2 einstellbar ist. Die Steuerungsfunktion wird durch ein auf dem Mikroprozessor MC ablaufendes Programm realisiert. Es kann lediglich ein Potentiometer oder auch mehrere Potentiometer vorgesehen sein.

Die Anschlüsse A1 und A2 der Potentiometer PT1 und PT2 sind jeweils zwischen die Ausgänge M1 und M2 des Mikroprozessors MC eingeschleift, d.h. die Anschlüsse A1 sind jeweils mit dem Anschluss M1 und die Anschlüsse A2 jeweils mit dem Anschluss M2 verbunden. Die Anschlüsse M1 und M2 des Mikroprozessors MC können dynamisch bzw. während der Laufzeit als digitale Ausgänge oder digitale Eingänge konfiguriert werden. Wenn die Anschlüsse M1 und M2 als Ausgang konfiguriert sind, liegt an ihnen in Abhängigkeit von einem softwareseitig eingestellten Wert entweder die Massespannung GND oder die Versorgungsspannung VS an. Wenn die Anschlüsse M1 und M2 als Eingänge konfiguriert sind, sind die Anschlüsse hochohmig und es wird in Abhängigkeit von einem am Anschluss anstehenden Spannungspegel bei einem Lesevorgang eine logische "1" bzw. eine logische "0" eingelesen.

Die Anschlüsse M3 und M4 des Mikroprozessors MC sind dynamisch als analoge Eingänge, als digitale Eingänge oder als digitale Ausgänge konfigurierbar. Wenn die Anschlüsse M3 bzw. M4 als analoge Eingänge konfiguriert sind, wird ein am Anschluss M3 bzw. M4 anliegender Spannungspegel bei einem Wandlungsvorgang in einen digitalen Wert umgewandelt. Wenn die Anschlüsse als digitale Eingänge oder Ausgänge konfiguriert sind, entspricht ihre Funktion derjenigen der Anschlüsse M1 und M2.

Der Widerstand R1 ist zwischen den Anschluss M5 und den Anschluss M3 eingeschleift. Der Widerstand R2 ist zwischen den Anschluss M6 und den Anschluss M4 eingeschleift. Der Zwischenabgriff ZA des Potentiometers PT1 ist mit dem Anschluss M3 und der Zwischenabgriff ZA des Potentiometers PT2 ist mit dem Anschluss M4 verbunden.

### Funktion

Nachfolgend wird die Funktion der gezeigten Schaltungsanordnung beim Einsatz in einer vorgenannten Kochmulde erläutert.

Nach dem Anlegen der Versorgungsspannung VS an den Mikroprozessor MC konfiguriert dieser in einem ersten Schritt seine Anschlüsse M1, M2, M4, M5 und M6 als digitale Eingänge und den Anschluss M3 als Ausgang. Nachfolgend legt der Mikroprozessor MC an den Ausgang M3 einen einer logischen "1" entsprechenden Pegel an, beispielsweise 5V, und liest die an den Eingängen M1, M2, M4, M5 und M6 anliegenden Signale ein. An allen Eingängen M1, M2, M4, M5 und M6 muss aufgrund der Beschaltung eine logische "1" eingelesen werden. Wenn dies nicht der Fall ist, kann auf einen Fehler, beispielsweise in der Verdrahtung der Potentiometer PT1 bzw. PT2, geschlossen werden. Der Mikroprozessor MC kann daraufhin alle Heizeinrichtungen abschalten oder in Abhängigkeit von den an den Eingängen eingelesenen Signalen lediglich einzelne Heizeinrichtungen deaktivieren.

Nachfolgend konfiguriert der Mikroprozessor MC in einem zweiten Schritt die Anschlüsse M1, M2, M3, M5 und M6 als digitale Eingänge und den Anschluss M4 als Ausgang, legt an den Ausgang M4 einen einer logischen "1" entsprechenden Pegel an und liest die an den Eingängen M1, M2, M3, M5 und M6 anliegenden Signale ein. An den Eingängen M1, M2, M3, M5 und M6 muss aufgrund der Beschaltung überall eine logische "1" eingelesen werden. Wenn dies nicht der Fall ist, kann auf einen Fehler, beispielsweise in der Verdrahtung der Potentiometer PT1 bzw. PT2, geschlossen werden. Der Mikroprozessor MC kann daraufhin alle Heizeinrichtungen abschalten oder in Abhängigkeit von den an den Eingängen eingelesenen Signalen lediglich einzelne Heizeinrichtungen deaktivieren.

Der erste und/oder der zweite Schritt werden üblicherweise lediglich in einer Initialisierungsphase der Schaltungsanordnung ausgeführt. Die Schritte können jedoch auch zyklisch in bestimmten Zeitabständen ausgeführt werden. Weiterhin sollte an den Anschlüssen M3 bzw. M4 anstatt einer "1" auch eine "0" ausgegeben werden.

Anschließend konfiguriert der Mikroprozessor MC in einem dritten Schritt die Anschlüsse M1 und M2 als Ausgänge, die Anschlüsse M3 und M4 als analoge Eingänge und die Anschlüsse M5 und M6 als digitale Eingänge. Durch internes Verbinden des Anschlusses M1 mit Masse wird eine erste Ansteuerspannung in Form der Massespannung GND an den jeweils ersten Anschluss A1 der Potentiometer PT1 und PT2 angelegt. Durch internes Verbinden des Anschlusses M2 mit der Versorgungsspannung VS wird eine zweite Ansteuerspannung in Form der Versorgungsspannung VS an den jeweils zweiten Anschluss A2 der Potentiometer PT1 und PT2 angelegt. Da die Anschlüsse M5 und M6 hochohmig geschaltet sind, wirken sich die Widerstände R1 und R2 nicht aus. An den Anschlüssen M3 und M4 liegen nun Spannungen an, die von der jeweiligen Stellung der Potentiometer PT1 und PT2 und von der Spannungsdifferenz zwischen den jeweiligen Anschlüssen A1 und A2 der Potentiometer PT1 und PT2 abhängen. Beispielsweise können am Anschluss M3 2V und am Anschluss M4 3V anliegen. Anhand der an den Anschlüssen M3 und M4 eingelesenen, digitalisierten ersten Messspannungen kann nun einfach die jeweilige Potentiometerstellung im Mikroprozessor MC berechnet werden.

Anschließend legt der Mikroprozessor MC in einem vierten Schritt durch internes Verbinden des Anschlusses M1 mit der Versorgungsspannung VS die zweite Ansteuerspannung VS an den jeweils ersten Anschluss A1 der Potentiometer PT1 und PT2 an. Durch internes Verbinden des Anschlusses M2 mit der Massespannung GND wird die erste Ansteuerspannung GND an den jeweils zweiten Anschluss A2 der Potentiometer PT1 und PT2 angelegt. Da die Anschlüsse M5 und M6 hochohmig geschaltet sind, wirken sich die Widerstände R1 und R2 nicht aus. Wenn die Potentiometerstellung zwischen dem dritten und dem vierten Schritt unverändert geblieben ist, muss, da die Spannung zwischen den Anschlüssen A1 und A2 invertiert wurde, eine Summe aus der in Schritt 3 an den Anschlüssen M3 und M4 gemessenen ersten Messspannung und der entsprechenden in Schritt 4 gemessenen zweiten Messspannung gleich der Differenz zwischen der zweiten und der ersten angelegten Ansteuerspannung sein, d.h. beispielsweise 5V betragen. Wenn dies nicht der Fall ist, kann auf einen Fehler, beispielsweise ein defektes Potentiometer, geschlossen werden. Der Mikroprozessor kann daraufhin die dem Potentiometer zugeordnete Heizeinrichtung abschalten und eine Fehlermeldung ausgeben. Selbstverständlich kann auch in diesem Schritt die Potentiometerstellung berechnet werden.

In einem optionalen fünften Schritt besteht die Möglichkeit, eine Widerstandsmessung der Potentiometer PT1 und PT2 vorzunehmen. Hierzu dienen die Anschlüsse M5 und M6 sowie die Widerstände R1 und R2. Die Anschlüsse M5 und M6 werden in diesem Fall als Ausgänge konfiguriert. Die Anschlüsse M1 bis M4 sind geeignet zu konfigurieren.

Die Widerstandsmessung wird vereinfacht, wenn an den Ausgängen M1 und M2 nur ein Potentiometer angeschlossen ist. In diesem Fall können weitere Potentiometer bzw. das Potentiometer PT2 in entsprechender Weise an nicht dargestellten Anschlusspaaren des Mikroprozessors angeschlossen sein. Für den nicht gezeigten Fall, dass an den Anschlüssen M1 und M2 nur das Potentiometer PT1 angeschlossen ist, werden für eine Widerstandsmessung eines Widerstandes zwischen den Anschlüssen ZA und A2 des Potentiometers PT1 die Anschlüsse M5 und M2 als Ausgänge, der Anschluss M3 als analoger Eingang und der Anschluss M1 als Eingang konfiguriert. Am Anschluss M5 wird dann beispielsweise ein einer logischen "1" entsprechender Spannungspegel und am Anschluss M2 ein einer logischen "0" entsprechender Spannungspegel ausgegeben. Der Widerstand R1 und der Widerstand des Potentiometers PT1 zwischen den Anschlüssen ZA und A2 bilden einen Spannungsteiler, d.h. die am Anschluss M3 anstehende Spannung ergibt sich aus der Spannungsdifferenz der beiden Spannungspegel und einem Verhältnis des Widerstandes R1 und des Potentiometerwiderstandes zwischen den Anschlüssen ZA und A2. Aus der am Anschluss M3 gemessenen Spannung kann folglich einfach der Widerstand des Potentiometers PT1 zwischen den Anschlüssen ZA und A2 berechnet werden.

Zur Messung eines Widerstandes zwischen den Potentiometeranschlüssen ZA und A1 wird der Anschluss M2 als Eingang und der Anschluss M1 als Ausgang konfiguriert und am Ausgang M1 wiederum ein Spannungspegel entsprechend einer logischen "0" ausgegeben. Die Widerstandsberechnung erfolgt wie oben bereits beschrieben. Als logische Konsistenzprüfung kann überprüft werden, ob eine Summe aus dem gemessenen Widerstand zwischen den Anschlüssen A1 und ZA und dem gemessenen Widerstand zwischen den Anschlüssen A2 und ZA dem bereits zum Entwurfszeitpunkt bekannten Gesamtwiderstand des Potentiometers PT1 zwischen den Anschlüssen A1 und A2 entspricht.

Im beschriebenen Ausführungsbeispiel werden der erste Anschluss A1 und der zweite Anschluss A2 des jeweiligen Potentiometers PT1 bzw. PT2 abwechselnd mit der ersten Ansteuerspannung GND und mit der zweiten Ansteuerspannung VS beaufschlagt. Zur Funktionsüberprüfung im Rahmen einer Initialisierung wird zusätzlich der Zwischenabgriff ZA mit der ersten und/oder der zweiten Ansteuerspannung beaufschlagt.

Die gezeigte Schaltungsanordnung ermöglicht insgesamt eine variable Ansteuerung der Potentiometeranschlüsse mit unterschiedlichen Spannungen, wodurch verschiedene Betriebsarten einstellbar und unterschiedliche Betriebsgrößenberechnungen und Plausibilitätsberechnungen durchführbar sind. So ist ein stromsparender Betrieb, beispielsweise in einem Stand-By-Betrieb der Steuerung, dadurch realisierbar, dass die Anschlüsse M1 und M2 des Mikroprozessors nur in bestimmten Zeitabständen, beispielsweise alle 200ms, eine Spannungsdifferenz zwischen den Anschlüssen A1 und A2 der Potentiometer PT1 und PT2 erzeugen. Hierzu liegt bei aktiver Messung am Anschluss M1 die Versorgungsspannung VS und am Anschluss M2 die Massespannung GND oder umgekehrt an. Bei nicht aktiver Messung liegt an den Anschlüssen M1 und M2 jeweils VS oder GND an, wodurch kein Strom durch die Potentiometer PT1 und PT2 fließt.

Die beschriebene Reihenfolge der Verfahrensschritte kann selbstverständlich auch geeignet vertauscht werden.

## Patentansprüche

1. Verfahren zur Auswertung eines Potentiometers (PT1, PT2), das einen ersten Anschluss (A1), einen zweiten Anschluss (A2) und einen Zwischenabgriff (ZA) aufweist, wobei ein Widerstand zwischen dem ersten Anschluss (A1) und dem zweiten Anschluss (A2) unabhängig von der Stellung des Potentiometers (PT1, PT2) ist,
**gekennzeichnet durch** die Schritte:
- Anlegen einer ersten Ansteuerspannung (GND) an den ersten Anschluss (A1) des Potentiometers (PT1, PT2),
- Anlegen einer zweiten Ansteuerspannung (VS) an den zweiten Anschluss (A2) des Potentiometers (PT1, PT2),
- Messen und Speichern einer ersten, am Zwischenabgriff (ZA) anliegenden Messspannung,
- Anlegen der zweiten Ansteuerspannung (VS) an den ersten Anschluss (A1) des Potentiometers (PT1, PT2),
- Anlegen der ersten Ansteuerspannung (GND) an den zweiten Anschluss (A2) des Potentiometers (PT1, PT2),
- Messen und Speichern einer zweiten, am Zwischenabgriff (ZA) anliegenden Messspannung und
- Auswerten der ersten und der zweiten Messspannung zur Bestimmung der Funktionsfähigkeit und/oder der Stellung des Potentiometers (PT1, PT2), wobei
- das Potentiometer (PT1, PT2) als funktionsfähig bestimmt wird, wenn die Summe aus der ersten und der zweiten Messspannung gleich der Differenz zwischen der zweiten Ansteuerspannung (VS) und der ersten Ansteuerspannung (GND) ist.

2. Verfahren nach Anspruch 1, **dadurch gekennzeichnet, dass** die erste Ansteuerspannung eine Massespannung (GND) und die zweite Ansteuerspannung eine Versorgungsspannung (VS) einer das Potentiometer (PT1, PT2) aufweisenden elektrischen Schaltungsanordnung ist.

3. Verfahren nach einem der vorhergehenden Ansprüche, **dadurch gekennzeichnet, dass** vor den im Anspruch 1 durchgeführten Schritten oder im Anschluss an die im Anspruch 1 durchgeführten Schritte
- der erste und der zweite Anschluss nicht mit einer Spannung beaufschlagt werden,
- der Zwischenabgriff (ZA) mit der ersten oder der zweiten Ansteuerspannung (GND, VS) beaufschlagt wird und
- eine dritte Messspannung am ersten Anschluss (A1) und eine vierte Messspannung am zweiten Anschluss (A2) gemessen werden, die zur Bestimmung der Funktionsfähigkeit des Potentiometers (PT1, PT2) ausgewertet werden, wobei
- das Potentiometer (PT1, PT2) als funktionsfähig bestimmt wird, wenn die dritte Messspannung und die vierte Messspannung mit der ersten bzw. zweiten Ansteuerspannung (GND, VS) übereinstimmen.

4. Schaltungsanordnung zur Durchführung des Verfahrens nach einem der Ansprüche 1 bis 3, mit
- einem Potentiometer (PT1, PT2), das einen ersten Anschluss (A1), einen zweiten Anschluss (A2) und einen Zwischenabgriff (ZA) aufweist, wobei ein Widerstand zwischen dem ersten Anschluss (A1) und dem zweiten Anschluss (A2) unabhängig von der Stellung des Potentiometers (PT1, PT2) ist, und
- einem Mikroprozessor (MC) mit einem ersten Anschluss (M1), einem zweiten Anschluss (M2) und einem dritten Anschluss (M3), wobei der erste Anschluss (M1) und der zweite Anschluss (M2) jeweils zur Ausgabe einer ersten Spannung (GND) und mindestens einer zweiten, von der ersten Spannung (GND) verschiedenen Spannung (VS) konfigurierbar sind und der dritte Anschluss (M3) zur Messung einer analogen Spannung konfigurierbar ist,
**dadurch gekennzeichnet, dass**
- der erste Anschluss (A1) des Potentiometers (PT1, PT2) mit dem ersten Anschluss (M1) des Mikroprozessors (MC) verbunden ist,
- der zweite Anschluss (A2) des Potentiometers (PT1., PT2) mit dem zweiten Anschluss (M2) des Mikroprozessors (MC) verbunden ist und
- der Zwischenabgriff (ZA) des Potentiometers (PT1, PT2) mit dem dritten Anschluss (M3) des Mikroprozessors (MC) verbunden ist, wobei der Mikroprozessor zur Durchführung des Verfahrens nach einem der Ansprüche 1 bis 3 ausgebildet ist.

5. Schaltungsanordnung nach Anspruch 4, **dadurch gekennzeichnet, dass** der erste Anschluss (M1) und der zweite Anschluss (M2) des Mikroprozessors (MC) als Eingang konfigurierbar sind und der dritte Eingang (M3) zur Ausgabe einer Spannung (GND, VS) konfigurierbar ist.

6. Schaltungsanordnung nach Anspruch 4 oder 5, **dadurch gekennzeichnet, dass** ein Widerstand (R1, R2) zwischen den Zwischenabgriff (ZA) und einen vierten Anschluss (M5, M6) des Mikroprozessors (MC) oder ein schaltbares Bezugspotential (GND, VS) eingeschleift ist.

7. Schaltungsanordnung nach einem der Ansprüche 4 bis 6, **dadurch gekennzeichnet, dass** mindestens ein weiteres Potentiometer (PT2) vorgesehen ist, das einen ersten Anschluss (A1), einen zweiten Anschluss (A2) und einen Zwischenabgriff (ZA) aufweist, wobei ein Widerstand zwischen dem ersten Anschluss (A1) und dem zweiten Anschluss (A2) unabhängig von der Stellung des weiteren Potentiometers (PT2) ist und der erste Anschluss (A1) des weiteren Potentiometers (PT2) mit dem ersten Anschluss (M 1) des Mikroprozessors (MC) verbunden ist, wobei der zweite Anschluss (A2) des weiteren Potentiometers (PT2) mit dem zweiten Anschluss (M2) des Mikroprozessors (MC) verbunden ist und ein Zwischenabgriff (ZA) des weiteren Potentiometers (PT2) mit einem fünften Anschluss (M4) des Mikroprozessors (MC) verbunden ist, der zur Messung einer analogen Spannung konfigurierbar ist.

## Claims

1. A method for evaluating a potentiometer (PT1, PT2) having a first terminal (A1), a second terminal (A2) and an intermediate tap (ZA), a resistance value between the first terminal (A1) and the second terminal (A2) being independent of the position of the potentiometer (PT1, PT2), **characterized by** the steps:
- applying a first drive voltage (GND) to the first terminal (A1) of the potentiometer (PT1, PT2),
- applying a second drive voltage (VS) to the second terminal (A2) of the potentiometer (PT1, PT2),
- measuring and storing a first measurement voltage present at the intermediate tap (ZA),
- applying the second drive voltage (VS) to the first terminal (A1) of the potentiometer (PT1, PT2),
- applying the first drive voltage (GND) to the second terminal (A2) of the potentiometer (PT1, PT2),
- measuring and storing a second measurement voltage present at the intermediate tap (ZA), and
- evaluating the first and second measurement voltages for determining the operability and/or the position of the potentiometer (PT1, PT2), wherein
- the potentiometer (PT1, PT2) is determined as operational if the sum of the first and second measurement voltages is equal to the difference between the second drive voltage (VS) and the first drive voltage (GND).

2. The method according to claim 1, **characterized in that** the first drive voltage is a ground voltage (GND) and the second drive voltage is a supply voltage (VS) of an electrical circuit arrangement having a potentiometer (PT1, PT2).

3. The method according to any of the preceding claims, **characterized in that** prior to the steps performed according to claim 1 or subsequent to the steps performed according to claim 1
- a voltage is not applied to the first and the second terminals,
- the first or the second drive voltages (GND, VS) is applied to the intermediate tap (ZA), and
- a third measurement voltage is measured at the first terminal (A1) and a fourth measurement voltage is measured at the second terminal (A2), wherein the voltages are evaluated for determining the operability of the potentiometer (PT1, PT2), wherein
- the potentiometer (PT1, PT2) is determined as operational if the third measurement voltage and the fourth measurement voltage coincide with the first and the second drive voltages (GND, VS), respectively.

4. A circuit arrangement for performing the method according to any of the claims 1 to 3, having
- a potentiometer (PT1, PT2), which is provided with a first terminal (A1), a second terminal (A2) and an intermediate tap (ZA), a resistance value between the first terminal (A1) and the second terminal (A2) being independent of the position of the potentiometer (PT1, PT2), and
- a microprocessor (MC) having a first terminal (M1), a second terminal (M2) and a third terminal (M3), wherein the first terminal (M1) and the second terminal (M2) are configurable for outputting a first voltage (GND) and at least one second voltage (VS) differing from the first voltage (GND) and the third terminal (M3) is configurable for measuring an analogue voltage,
**characterized in that**
- the first terminal (A1) of the potentiometer (PT1, PT2) is connected to the first terminal (M1) of the microprocessor (MC),
- the second terminal (A2) of the potentiometer (PT1, PT2) is connected to the second terminal (M2) of the microprocessor (MC), and
- the intermediate tap (ZA) of the potentiometer (PT1, PT2) is connected to the third terminal (M3) of the microprocessor (MC), the microprocessor being configured for performing the method according to any of the claims 1 to 3.

5. The circuit according to claim 4, **characterized in that** the first terminal (M1 and the second terminal (M2) of the microprocessor (MC) are input-configurable and the third input (M3) is configurable for outputting a voltage (GND, VS).

6. The circuit according to claim 4 or 5, **characterized in that** a resistor (R1, R2) is connected between the intermediate tap (ZA) and a fourth terminal (M5, M6) of the microprocessor (MC) or a switchable reference potential (GND, VS).

7. The circuit according to any of the claims 4 to 6, **characterized in that** at least one further potentiometer (PT2) is provided having a first terminal (A1), a second terminal (A2) and an intermediate tap (ZA), wherein a resistance value between the first terminal (A1) and the second terminal (A2) is independent of the position of the further potentiometer (PT2) and the first terminal (A1) of the further potentiometer (PT2) is connected to the first terminal (M1) of the microprocessor (MC), wherein the second terminal (A2) of the further potentiometer (PT2) is connected to the second terminal (M2) of the microprocessor (MC) and an intermediate tap (ZA) of the further potentiometer (PT2) is connected to a fifth terminal (M4) of the microprocessor (MC), which is configurable for measuring an analogue voltage.

## Revendications

1. Procédé d'évaluation d'un potentiomètre (PT1, PT2) qui présente une première borne de raccordement (A1), une deuxième borne de raccordement (A2) et une borne de prélèvement intermédiaire (ZA), une résistance entre la première borne de raccordement (A1) et la deuxième borne de raccordement (A2) étant indépendante de la position du potentiomètre (PT1, PT2),
**caractérisé par** les étapes qui consistent à :
- appliquer une première tension d'activation (GND) sur la première borne de raccordement (A1) du potentiomètre (PT1, PT2),
- appliquer une deuxième tension d'activation (VS) sur la deuxième borne de raccordement (A2) du potentiomètre (PT1, PT2),
- mesurer et conserver une première tension de mesure appliquée sur la borne de prélèvement intermédiaire (ZA),
- appliquer la deuxième tension d'activation (VS) sur la première borne de raccordement (A1) du potentiomètre (PT1, PT2),
- appliquer la première tension d'activation (GND) sur la deuxième borne de raccordement (A2) du potentiomètre (PT1, PT2),
- mesurer et conserver en mémoire une deuxième tension de mesure appliquée sur la borne de prélèvement intermédiaire (ZA) et
- évaluer la première et la deuxième tension de mesure pour déterminer le bon fonctionnement et/ou la position du potentiomètre (PT1, PT2),
- le potentiomètre (PT1, PT2) étant déterminé comme fonctionnant correctement lorsque la somme de la première et de la deuxième tension de mesure est égale à la différence entre la deuxième tension d'activation (VS) et la première tension d'activation (GND).

2. Procédé selon la revendication 1, **caractérisé en ce que** la première tension d'activation est une tension de masse (GND) et la deuxième tension d'activation une tension d'alimentation (VS) d'un circuit électrique qui présente le potentiomètre (PT1, PT2).

3. Procédé selon l'une des revendications précédentes, **caractérisé en ce qu'**avant l'exécution des étapes de la revendication 1 ou après l'exécution des étapes de la revendication 1,
- une tension n'est pas appliquée sur la première et la deuxième borne de raccordement,
- la première ou la deuxième tension d'activation (GND, VS) est appliquée sur la borne de prélèvement intermédiaire (ZA) et
- une troisième tension de mesure est mesurée sur la première borne de raccordement (A1) et une quatrième tension de mesure est mesurée sur la deuxième borne de raccordement (A2), ces tensions étant évaluées pour déterminer le bon fonctionnement du potentiomètre (PT1, PT2),
- le potentiomètre (PT1, PT2) étant déterminé comme fonctionnant correctement si la troisième tension de mesure et la quatrième tension de mesure correspondent respectivement à la première et à la deuxième tension d'activation (GND, VS).

4. Circuit en vue de l'exécution des procédés selon l'une des revendications 1 à 3, qui présente :
- un potentiomètre (PT1, PT2) doté d'une première borne de raccordement (A1), d'une deuxième borne de raccordement (A2) et d'une borne de prélèvement intermédiaire (ZA), une résistance entre la première borne de raccordement (A1) et la deuxième borne de raccordement (A2) étant indépendante de la position du potentiomètre (PT1, PT2),
- un microprocesseur (MC) qui présente une première borne de raccordement (M1), une deuxième borne de raccordement (M2) et une troisième borne de raccordement (M3), la première borne de raccordement (M1) et la deuxième borne de raccordement (M2) pouvant être configurées pour délivrer une première tension (GND) et au moins une deuxième tension (VS) différente de la première tension (GND), la troisième borne de raccordement (M3) pouvant être configurée pour mesurer une tension analogique,
**caractérisé en ce que**
- la première borne de raccordement (A1) du potentiomètre (PT1, PT2) est reliée à la première borne de raccordement (M1) du microprocesseur (MC),
- la deuxième borne de raccordement (A2) du potentiomètre (PT1, PT2) est reliée à la deuxième borne de raccordement (M2) du microprocesseur (MC) et
- la borne de prélèvement intermédiaire (ZA) du potentiomètre (PT1, PT2) est reliée à la troisième borne de raccordement (M3) du microprocesseur (MC), le microprocesseur étant configuré pour exécuter le procédé selon l'une des revendications 1 à 3.

5. Circuit selon la revendication 4, **caractérisé en ce que** la première borne de raccordement (M1) et la deuxième borne de raccordement (M2) du microprocesseur (MC) peuvent être configurées comme entrées et **en ce que** la troisième entrée (M3) peut être configurée pour délivrer une tension (GDN, VS).

6. Circuit selon la revendication 4 ou 5, **caractérisé en ce qu'**une résistance (R1, R2) est insérée entre la borne de prélèvement intermédiaire (ZA) et une quatrième borne de raccordement (M5, M6) du microprocesseur (MC) ou un potentiel de référence (GND, VS) commutable.

7. Circuit selon l'une des revendications 4 à 6, **caractérisé en ce qu'**il présente au moins un autre potentiomètre (PT2) qui présente une première borne de raccordement (A1), une deuxième borne de raccordement (A2) et une borne de prélèvement intermédiaire (ZA), une résistance entre la première borne de raccordement (A1) et la deuxième borne de raccordement (A2) étant indépendante de la position de l'autre potentiomètre (PT2), et **en ce que** la première borne de raccordement (A1) de l'autre potentiomètre (PT2) est reliée à la première borne de raccordement (M1) du microprocesseur (MC), la deuxième borne de raccordement (A2) de l'autre potentiomètre (PT2) étant reliée à la deuxième borne (M2) du microprocesseur (MC), une borne de prélèvement intermédiaire (ZA) de l'autre potentiomètre (PT2) étant reliée à une cinquième borne de raccordement (M4) du microprocesseur (MC) qui peut être configurée pour mesurer une tension analogique.
